# FASCICULE DE BREVET EUROPEEN

(11) **EP 3 140 238 B1**
(45) Date de publication et mention de la délivrance du brevet: **09.02.2022**
(21) Numéro de dépôt: 15717545.6
(22) Date de dépôt: 20.03.2015
(51) Int. Cl.: B66D 3/18, B66D 3/22

(54) **TREUIL MODULAIRE EMBARQUE**
MODULARE BORDWINDE
ON-BOARD MODULAR HOIST

(30) Priorité: 06.05.2014 FR 1454083
(43) Date de publication de la demande: 15.03.2017
(73) Titulaire: REEL, 69450 Saint-Cyr au Mont d'Or (FR)
(72) Inventeur: FIGOUREUX, David, F-13300 Salon de Provence (FR)
(74) Mandataire: Cabinet Laurent & Charras
(86) Numéro de dépôt international: PCT/FR2015/050689
(87) Numéro de publication internationale: WO 2015/170019

(56) Documents cités:
- DE-U1- 8 138 693
- GB-A- 967 691
- US-A- 2 991 976
- US-A- 5 170 995

## Description

### DOMAINE TECHNIQUE

La présente invention se rapporte au secteur technique des treuils, et concerne plus particulièrement un treuil modulaire embarqué sur un aéronef. L'invention trouve notamment une application avantageuse mais non limitative dans les treuils pour hélicoptère.

Par modulaire on entend que le treuil est constitué d'un sous-ensemble de modules. Par aéronef on entend tout moyen de transport capable d'évoluer au sein de l'atmosphère terrestre.

### ART ANTERIEUR

Il est connu, à ce jour, plusieurs types de treuils ayant des conceptions diverses pour réaliser des missions de sauvetage héliportée par exemple, ou encore de manutention de matériels par la voie aérienne. Ces treuils sont dédiés à un type d'hélicoptère ou à un type de mission, et ont des structures différentes selon leurs performances. Par exemple, certains treuils ont des moteurs à alimentation hydraulique, électrique ou même pneumatique. Ainsi, ces mêmes treuils peuvent avoir des vitesses de déroulement du câble ou des longueurs de câbles différentes en fonction des performances liées à la mission pour lesquelles ils sont conçus. Le sauvetage en montagne par exemple, nécessite généralement de très longues longueurs de câbles pour notamment pouvoir treuiller le long des parois. A contrario, les missions de dépose de personnels sur des éoliennes ou des navires par exemple ne nécessitent pas des longueurs de câble aussi importantes. Le même raisonnement s'applique pour les vitesses de montée et descente du câble, et également pour la force de traction.

Les hélicoptères sont souvent polyvalents et s'utilisent pour différents types de missions. A chaque nouvelle conception de treuil, les performances maximales nécessaires sont mises en œuvre pour satisfaire l'ensemble des contraintes des missions les plus exigeantes. Les treuils les plus modernes sont donc les plus performants. Et plus les performances d'un treuil sont élevées, plus la masse de celui-ci est importante. Cet état de fait implique qu'un opérateur d'hélicoptère qui équipe son appareil avec un treuil, est contraint de choisir le treuil le plus lourd pour disposer du treuil le plus performant et donc le plus polyvalent. Lorsque ce dernier est missionné pour une mission nécessitant de faibles longueurs de câble et capacités de levage, il emporte un treuil surdimensionné comprenant une longueur de câble et une capacité de levage souvent trop importantes. La masse emportée est donc bien plus importante que nécessaire avec tous les inconvénients que cela engendre, notamment en termes d'impact sur la consommation de carburant, et donc sur le rayon d'action qui peut être primordial pour la mission en question. Des exemples de treuils sont connues des documents DE 8 138 693 U1 ou US 2011 180 770 A1.

### EXPOSE DE L'INVENTION

Ainsi donc, l'invention vise un treuil modulaire, c'est-à-dire un treuil dont les performances peuvent être adaptées en fonction de la mission à effectuer. Le poids d'un tel treuil sera alors approprié aux performances de celui-ci.

Pour résoudre les problèmes précités, il a été mis au point un treuil modulaire embarqué sur un aéronef, comportant au moins un câble enroulé sur un tambour. Selon l'invention, ledit treuil comprend un ensemble mécanique de base destiné à être fixé sur l'aéronef, apte à recevoir de manière amovible au moins un module permettant de faire varier au moins l'une des caractéristiques des performances dudit treuil.

Plus spécifiquement, les performances susceptibles de varier sont la longueur du câble, son diamètre, la puissance du treuil et corollairement la vitesse d'enroulement et de déroulement dudit câble, et l'alimentation électrique du treuil (1).

A cet effet, l'ensemble mécanique de base (2) fixé sur l'aéronef comprend des moyens de connexion mécanique permettant de relier mécaniquement un module dit de motorisation susceptible de faire varier les caractéristiques liées à la puissance avec un module câble, ledit module câble étant susceptible de faire varier les caractéristiques liées au câble, et comprenant au moins un câble, au moins un tambour autour duquel le câble est destiné à être enroulé/déroulé, et des moyens de mise en rotation dudit tambour aptes à être connectés aux moyens de connexion mécanique.

On conçoit dès lors tout l'intérêt de la présente invention, qui permet, en raison du caractère modulaire des éléments essentiels d'un treuil, de pourvoir faire varier de manière très rapide les performances dudit treuil au gré des besoins, en raison de la mise en œuvre de modules indépendants.

De par la mise en œuvre d'un tel module câble, il est possible de moduler à volonté les caractéristiques du câble à embarquer, tant en termes de longueur que de diamètre, en fonction de l'opération à réaliser.

De préférence, le module susceptible de faire varier les caractéristiques liées à l'alimentation électrique est constitué par un module électronique, apte à produire à partir de l'alimentation électrique générée par l'aéronef un courant alternatif ou continu au module de motorisation.

De préférence, le module motorisation comprend des moyens de renvoi de la rotation de l'arbre moteur, et ledit arbre moteur est connecté audit aux moyens de connexion mécanique de l'ensemble mécanique de base par l'intermédiaire desdits moyens de renvoi.

Avantageusement, le module câble est électriquement connecté au module motorisation.

De la même manière, le module électronique est électriquement connecté aux moyens de connexion mécanique de l'ensemble mécanique de base.

Selon une forme de réalisation particulière, les moyens de connexion mécanique se présentent sous la forme d'un arbre creux, monté libre en rotation et destiné, d'une part, à être entrainé en rotation par le moteur du module motorisation et, d'autre part, à recevoir les moyens de mise en rotation du tambour pour les entrainer en rotation. L'arbre creux présente par exemple des cannelures internes.

Les moyens de mise en rotation du tambour se présentent sous la forme d'un arbre, destiné à coopérer avec l'arbre creux des moyens de connexion mécanique, ledit arbre entrainant en rotation ledit tambour par l'intermédiaire de moyens de renvoi pour l'enroulement/déroulement proprement dit du câble autour dudit tambour.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une représentation schématique en perspective d'un treuil modulaire embarqué selon l'invention ;
- la figure 2 est une représentation schématique similaire à celle de la figure 1, illustrant le treuil modulaire sous un autre angle de vue ;
- la figure 3 est une représentation schématique similaire à celle de la figure 2, une partie du carter du treuil étant effacée pour apercevoir l'intérieur dudit carter ;
- la figure 4 est une représentation schématique en perspective éclatée du treuil modulaire selon l'invention ;
- la figure 5 est une représentation schématique en perspective de l'ensemble mécanique de base du treuil modulaire ;
- la figure 6 est une représentation schématique en perspective similaire à celle de la figure 5, l'ensemble mécanique de base étant représenté sous un autre angle de vue ;
- la figure 7 est une représentation schématique en perspective du module câble ;
- la figure 8 est une représentation schématique en perspective similaire à celle de la figure 7, le module câble étant représenté sans son carter de protection ;
- la figure 9 est une représentation schématique en perspective des moyens de renvoi du module motorisation ;
- la figure 10 est une représentation schématique en perspective similaire à celle de la figure 9, les moyens de renvoi étant représentés sous un autre angle de vue.

### EXPOSE DETAILLE DE L'INVENTION

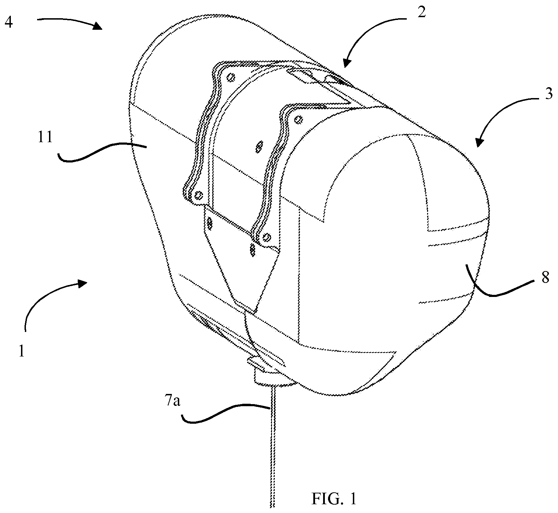

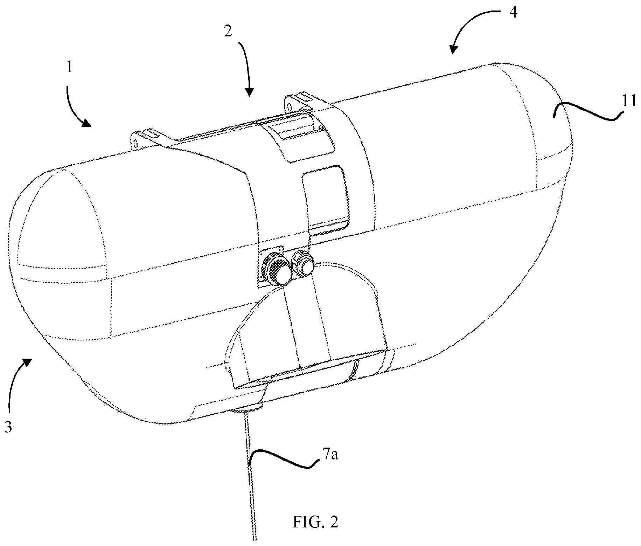

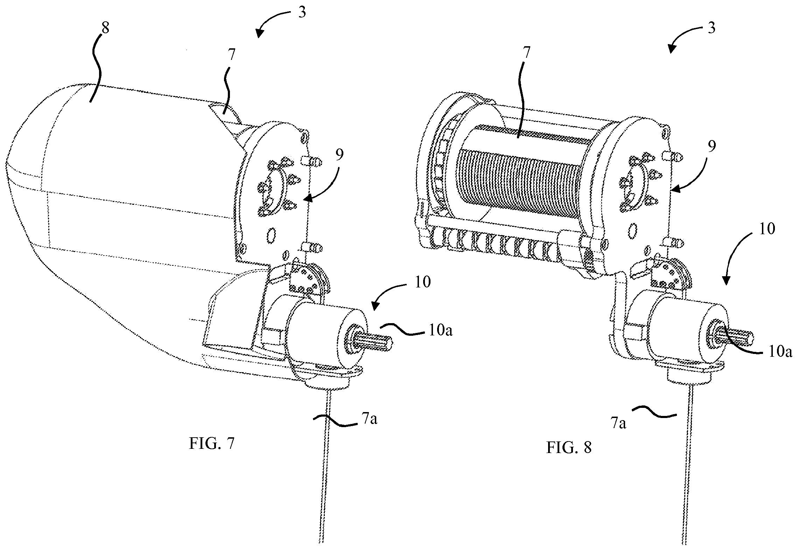

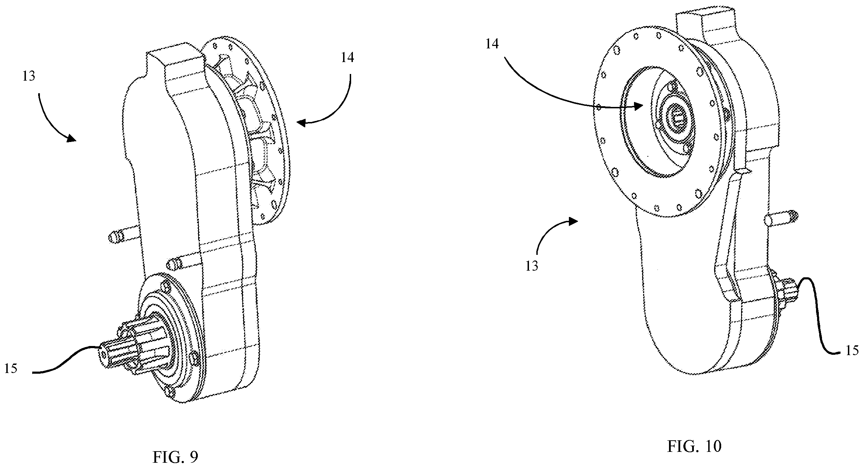

En référence aux figures 1 à 10, le treuil modulaire (1) embarqué sur un aéronef selon l'invention comprend un ensemble mécanique de base (2) destiné à être fixé sur l'aéronef et à recevoir de manière amovible, un module câble (3), un module motorisation (4) associé audit module câble, et un module électronique assujetti au module motorisation (4).

L'ensemble mécanique de base (2) assure ainsi l'interface mécanique (fixation sur l'aéronef) et électrique (puissance et commande) entre l'aéronef et le module câble (3).

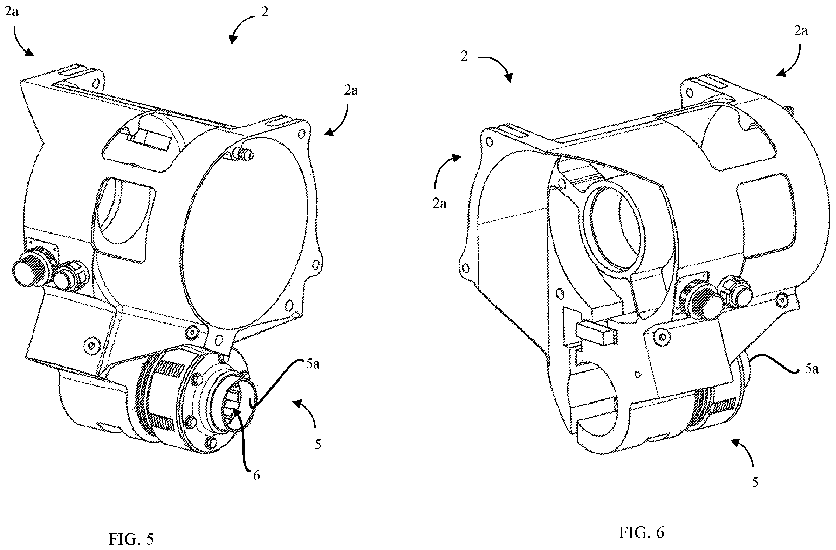

En référence aux figures 1 à 6, et plus particulièrement aux figures 5 et 6, l'ensemble mécanique de base (2) forme une partie du corps du treuil (1) et présente des agencements latéraux (2a) adaptés pour recevoir d'une manière amovible, par exemple par vissage, le module motorisation (4) d'un côté, et le module câble (3) de l'autre côté.

L'ensemble mécanique de base (2) comprend en outre des moyens de connexion mécanique (5) permettant de relier mécaniquement le module motorisation (4) avec le module câble (3). Les moyens de connexion mécanique (5) sont disposés en partie inférieure de l'ensemble mécanique de base (2) et comprennent un arbre creux (5a) monté libre en rotation. L'arbre creux (5a) présente des cannelures internes (6) et est apte à recevoir un arbre cannelé en engagement de chaque côté, pour transmettre la rotation de l'un à l'autre.

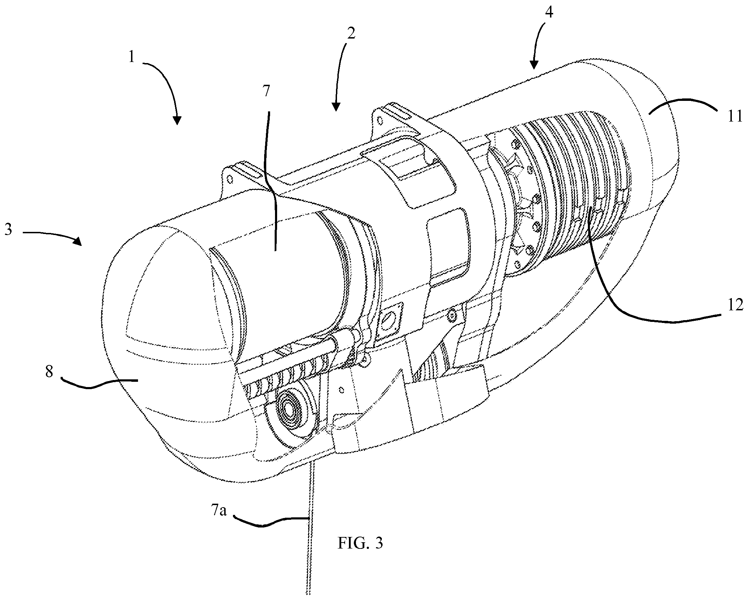

Le module câble (3) comprend un tambour (7) autour duquel ledit câble (7a) est stocké. Le module câble (3) permet de faire varier les caractéristique liées au câble (7a). En référence aux figures 3, 4, 7 et 8, le module câble (3) comprend un carter (8) apte à être fixé de manière amovible à l'ensemble mécanique de base (2) pour former une partie du corps du treuil modulaire (1)

Le carter (8) du module câble (3) comprend intérieurement et en partie supérieure, un tambour (7) monté avec capacité de rotation autour de son axe de révolution. Ledit tambour (7) est assujetti, par l'intermédiaire de moyens de renvoi (9), à des moyens de mise en rotation (10) pour permettre l'enroulement d'un câble (7a) autour dudit tambour (7). Ces moyens de mise en rotation (10) se présentent sous la forme d'un arbre cannelé (10a) faisant saillie du carter (8) du module câble (3). Ledit arbre cannelé (10a) est destiné à être inséré dans l'arbre creux (5a) des moyens de connexion mécanique (5) de l'ensemble mécanique de base (2), et à coopérer avec les cannelures internes (6) dudit arbre creux (5a).

Le câble (7a) est alors fixé, à une extrémité, au tambour (7) et comprend à son extrémité libre, un crochet et/ou une poignée (non représentés) en fonction des missions de treuillage à effectuer.

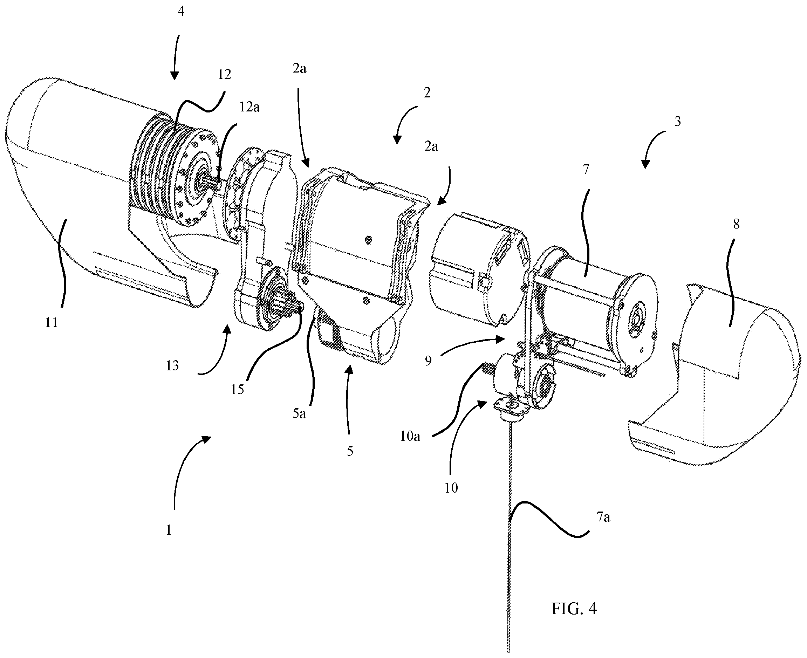

Le module motorisation (4) permet de faire varier les caractéristiques liées à la puissance. En référence aux figures 3 et 4, le module motorisation (4) comprend un carter (11) apte à être fixé de manière amovible à l'ensemble mécanique de base (2) pour former une partie du corps du treuil modulaire (1). Ce carter (11) renferme un moteur (12) muni d'un arbre moteur (12a). En référence aux figures 4, 9 et 10, l'arbre moteur (12a) est assujetti à des moyens de renvoi (13). Ces moyens de renvoi (13) comprennent, d'une part, des moyens de réception (14) de l'arbre moteur et, d'autre part, un arbre cannelé (15) destiné à être engagé dans l'arbre creux (5a) des moyens de connexion mécanique (5) de l'ensemble mécanique de base (2). Ledit arbre cannelé (15) est destiné à coopérer avec les cannelures internes (6) dudit arbre creux (5a). Les moyens de renvoi (13) sont aptes à transmettre par l'intermédiaire d'engrenages, de courroie, ou d'autres moyens, la rotation de l'arbre moteur (12a) à l'arbre cannelé (15).

La rotation du moteur (12) entraine la rotation de l'arbre cannelé (15), qui entraine la rotation de l'arbre creux (5a), qui entraine la rotation des moyens de mise en rotation (10) du tambour (7), et donc la rotation du tambour (7) permettant l'enroulement ou le déroulement du câble (7a).

Le module électronique permet de faire varier les caractéristiques liées à l'alimentation électrique, et est apte à produire, à partir de l'alimentation électrique générée par l'aéronef, un courant alternatif ou continu au module de motorisation.

En référence à la figure 4, le module électronique renferme une carte électronique pour la gestion des moyens de connexion mécanique (5) et donc du moteur (12). Cette carte comprend notamment des moyens de connexion électrique destinés à coopérer avec des moyens de connexion électrique desdits moyens de connexion mécanique (5).

Ces différents modules sont donc pourvus de moyens permettant de réaliser de manière aisée leur connexion mécanique et/ou électrique entre eux, ce, dans un souci de faciliter le choix de l'utilisateur en fonction de la mission à réaliser.

Comme il ressort de ce qui précède l'invention propose un treuil modulaire pouvant être interchangés facilement et rapidement en fonction par exemple de la puissance nécessaire du moteur, de la longueur de câble requise, etc... notamment en fonction de la mission de treuillage à effectuer.

Cela dit, et comme évoqué en préambule, l'ensemble mécanique de base (2) peut intégrer les fonctions du module de motorisation (4) et le module électronique.

## Revendications

1. Treuil modulaire (1) apte à être embarqué sur un aéronef, ledit treuil comportant au moins un câble (7a) enroulé sur un tambour (7), et comprenant un ensemble mécanique de base (2) destiné à être fixé sur l'aéronef, ledit ensemble mécanique de base étant apte à recevoir de manière amovible au moins un module (3, 4) permettant de faire varier au moins l'une des caractéristiques des performances dudit treuil, à savoir la longueur du câble (7a), son diamètre, la puissance du treuil (1) et corollairement la vitesse d'enroulement et de déroulement dudit câble (7a), l'alimentation électrique du treuil (1), ***caractérisé* :**
- **en ce que** l'ensemble mécanique de base (2) destiné à être fixé sur l'aéronef comprend des moyens de connexion mécanique (5) permettant de relier mécaniquement un module motorisation (4) susceptible de faire varier les caractéristiques liées à la puissance avec un module câble (3) ; et
- **en ce que** le module câble (3), susceptible de faire varier les caractéristiques liées au câble, comprend au moins un câble (7a), au moins un tambour (7) autour duquel le câble (7a) est destiné à être enroulé/déroulé, et des moyens de mise en rotation (10) dudit tambour (7) aptes à être connectés aux moyens de connexion mécanique (5).

2. Treuil modulaire (1) embarqué selon la revendication 1, ***caractérisé* :**
- **en ce que** le module motorisation (4) comprend un moteur (12) dont l'arbre moteur (12a) est apte à être connecté aux moyens de connexion mécanique (5), et;
- **en ce que** lesdits moyens de connexion mécanique (5) sont aptes à transmettre le mouvement de rotation de l'arbre moteur (12a) aux moyens de mise en rotation (10) du tambour (7) pour l'enroulement/déroulement dudit câble (7a).

3. Treuil modulaire (1) embarqué selon l'une des revendications 1 et 2, ***caractérisé* en ce que** le module susceptible de faire varier les caractéristiques liées à l'alimentation électrique est constitué par un module électronique, apte à produire à partir de l'alimentation électrique générée par l'aéronef un courant alternatif ou continu au module de motorisation (4).

## Patentansprüche

1. Modulare Bordwinde (1), zur Verladung auf ein Luftfahrzeug, diese Winde enthält mindestens ein Seil (7a), aufgewickelt auf eine Trommel (7) und eine mechanischen Basiseinheit (2), bestimmt zur Befestigung an einem Luftfahrzeug, diese mechanischer Basiseinheit ist in der Lage mindestens ein Modul (3, 4) aufzunehmen, mit dem mindestens eine der Leistungseigenschaften dieser Winde variiert werden kann, also die Seillänge (7a), sein Durchmesser, die Leistung der Winde (1) und gleichzeitig die Auf- und Abwickelgeschwindigkeit dieses Seils (7a) und die Stromversorgung der Winde (1), ***dadurch gekennzeichnet, dass***:
- die mechanische Basiseinheit (2) zur Befestigung am Luftfahrzeug mechanische Verbindungselemente (5) enthält, mit denen mechanisch ein Motormodul (4), mit dem die Eigenschaften in Zusammenhang mit der Leistung verändert werden können, mit einem Seilmodul (3) verbunden werden können; und
- dass das Seilmodul (3), mit dem die mit dem Seil verbundenen Eigenschaften verändert werden können, mindestens ein Seil (7a), mindestens eine Trommel (7) um die sich das Seil (7a) auf-/abwickeln kann sowie Vorrichtungen (10), um diese Trommel (7) in Drehung zu versetzen, enthält, die mit den mechanischen Verbindungsvorrichtungen (5) verbunden werden können.

2. Modulare Bordwinde (1) eingesetzt nach Anspruch 1, ***dadurch gekennzeichnet, dass***:
- die Motorbaugruppe (4) einen Motor (12) enthält, dessen Antriebswelle (12a) mit den mechanischen Verbindungsvorrichtungen (5) verbunden werden kann, und;
- dadurch, dass diese mechanischen Verbindungsvorrichtungen (5) in der Lage sind die Drehbewegung der Antriebswelle (12a) auf die Vorrichtungen (10) zu übertragen um diese Trommel (7) zum Auf-/ Abwickeln dieses Seils (7a). in Drehung zu versetzen.

3. Modulare Bordwinde (1) eingesetzt nach einem der Ansprüche 1 und 2, ***dadurch gekennzeichnet, dass*** das Modul, mit denen die Eigenschaften der Stromversorgung verändert werden können, aus einem elektronischen Modul bestehen, das in der Lage ist, aus der vom Luftfahrzeug erzeugten elektrischen Energie einen Wechseloder Gleichstrom für die Motorbaugruppe (4) zu erzeugen.

## Claims

1. A modular winch (1) designed to be onboard an aircraft, said winch including at least one cable (7a) wound onto a drum (7), and comprising a basic mechanical assembly (2) intended to be attached to the aircraft, said basic mechanical assembly being designed to receive, in a removable manner, at least one module (3, 4) for varying at least one of the performance characteristics of said winch, namely the length of the cable (7a), its diameter, the power of the winch (1) and consequently the winding and unwinding speed of said cable (7a), the power supply of the winch (1), ***characterized*:**
- **in that** the basic mechanical assembly (2) intended to be attached to the aircraft comprises mechanical connection means (5) for mechanically connecting a drive module (4), which is capable of varying the characteristics relating to the power, to a cable module (3); and
- **in that** the cable module (3), which is capable of varying the characteristics relating to the cable, comprises at least one cable (7a), at least one drum (7) around which the cable (7a) is intended to be wound/unwound, and rotation means (10) of said drum (7) designed to be connected to the mechanical connection means (5).

2. The onboard modular winch (1) according to claim 1, ***characterized*:**
- **in that** the drive module (4) comprises a motor (12) whose drive shaft (12a) is designed to be connected to the mechanical connection means (5), and;
- **in that** said mechanical connection means (5) are designed to transmit the rotational movement of the drive shaft (12a) to the rotation means (10) of the drum (7) for the winding/unwinding of said cable (7a).

3. The onboard modular winch (1) according to either of claims 1 or 2, ***characterized* in that** the module capable of varying the characteristics relating to the power supply consists of an electronic module, designed to produce an AC or DC current for the drive module (4) from the electrical power generated by the aircraft.
